# EUROPÄISCHE PATENTANMELDUNG

(11) **EP 2 518 023 A1**
(43) Veröffentlichungstag der Anmeldung: **31.10.2012**
(21) Anmeldenummer: 12157421.4
(22) Anmeldetag: 29.02.2012
(51) Int. Cl.: C02F 1/68, E03F 7/00

(54) **Vorrichtung und Verfahren zur Vermeidung oder Verringerung der Bildung von H2S, biogener Schwefelsäure und/oder Mercaptanen in wasserführenden Rohrsystemen**

(30) Priorität: 29.04.2011 DE 102011017774
(71) Anmelder: Cornelsen Solutions GmbH, 45141 Essen (DE)
(72) Erfinder: Cornelsen, Martin, 44795 Bochum (DE)
(74) Vertreter: Patentanwälte Bressel und Partner

(57) **Zusammenfassung**

Die Erfindung umfasst eine Vorrichtung und ein Verfahren zur Verringerung oder Vermeidung der Bildung von H₂S, biogener Schwefelsäure und/oder Mercaptanen in Abwasserkanalsystemen, wobei die Vorrichtung als Unterflur-Dosiersystem ausgebildet ist, welches eine tragende Konstruktion (1), einen Dosierbehälter (2) und eine Dosiereinrichtung (3) umfasst, wobei die tragende Konstruktion (1) aus einem Tragring (1.1) und einen Tragkorb (1.2) besteht, der Dosierbehälter (2) im Tragkorb (1.2) gelagert ist und am Behälterboden (2.1) eine Steckkupplung (2.6) zur Aufnahme der Dosiereinrichtung (3) angeordnet ist, wobei die Dosiereinrichtung (3) als Tropfendosierer ausgebildet ist.

## Beschreibung

Vorrichtung und Verfahren zur Vermeidung oder Verringerung der Bildung von H₂S, biogener Schwefelsäure und/oder Mercaptanen in wasserführenden Rohrsystemen

Die Erfindung betrifft eine Vorrichtung und ein Verfahren zur Vermeidung oder Verringerung der Bildung von H₂S, biogener Schwefelsäure und/oder Mercaptanen in wasserführenden Rohrsystemen, insbesondere in Abwasserkanalsystemen.

Durch sinkenden Wasserverbrauch fließt immer weniger Wasser durch die Abwasserkanalisation. Durch die Abnahme des sog. Trockenwetterabflusses (= Trinkwasserverbrauch + Fremdwasser) kommt es zu vermehrten Ablagerungen und zu Geruchsbelästigungen und es bildet sich biogene Schwefelsäure mit der Gefahr teurer Korrosionsschäden an Rohren und Schächten, die aus den Werkstoffen Beton und unbeschichteten Metallen bestehen.

Die Ursachen für die vorgenannten Ablagerungen begründen sich in einer Überdimensionierung der Kanäle, die vormals auf weit größere Abwassermengen ausgelegt wurden. Infolge des verringerten Trockenwetterabflusses wird die Mindestwandschubspannung der Rohre unterschritten, wodurch eine verstärkte Sedimentation eintritt. Die zunehmende Sedimentation führt in Abwasserkanalsystemen zu massiven Ablagerungen. Die Folgen davon sind:
- Verringerung des freien Rohrquerschnittes (Fließquerschnitt)
- Steigender Reinigungsaufwand
- Sulfidprobleme wie Beton- und Metallkorrosion
- Gefährdung des Betriebspersonals und von Anwohnern (Schwefelwasserstoff ist sehr giftig und kann bereits in geringen Konzentrationsmengen sogar tödlich wirken)
- negative Auswirkungen auf die Abwasseraufbereitung sowie
- massive Geruchsbelästigungen.

In den genannten Ablagerungen können sich unterschiedliche biologische Bedingungen (aerobe Atmung, anaerobe Nitratatmung und anaerobe Sulfatatmung) einstellen. Durch anaerobe Sulfatatmung kann es zur Bildung von giftigen, hochentzündlichen, umweltgefährlichen und gesundheitsschädlichen Stoffen wie H₂S und/oder Mercaptanen (z.B. Methanthiol, Ethanthiol) kommen, wobei sich das H₂S auch zu Schwefelsäure umsetzen kann, wodurch die oben beschriebenen Korrosionsprobleme entstehen.

Die Erhöhung des Frischwasserverbrauchs bis zum erforderlichen, der Dimensionierung der Kanäle entsprechenden Wert, könnte diese Probleme vermeiden, ist aber umweltpolitisch nicht durchsetzbar. Eine Redimensionierung der Abwassernetze ist sehr kostenintensiv und von daher nur langfristig möglich.

Aus der Praxis sind verschiedene Lösungsansätze zur Begegnung dieser Probleme bekannt. Dazu gehören häufige Inspektionen und Spülungen der Kanäle, künstliche Belüftung der Abwassernetze mit Reinigung der Abluft sowie die Behandlung des Abwassers in den Abwassernetzen durch Zuführung von Luft, technischen Sauerstoff oder Chemikalien (Nitraten) durch raumgreifende aufwändige Überflur-Dosiersysteme in Containerbauform oder außen aufgestellten Lager- und Dosiertanks. Bei derartigen Systemen sollen H₂S-Konzentrationsspitzen durch eine einmalige punktuelle Dosierung überproportionaler Mengen an Behandlungsmitteln behandelt werden.

Aus dem Stand der Technik sind auch Maßnahmen bekannt, welche die Geruchsbelästigung über in Kanalschächte eingesetzte Filtervorrichtungen vermeiden sollen. Derartige Vorrichtungen werden beispielsweise in den Druckschriften DE 93 01 464 U1, WO 98/16261, DE 103 07 783 A1 und DE 199 29 634 A1 beschrieben. Dabei werden die bereits entstandenen gefährlichen Abgase aber lediglich gefiltert und nicht an ihrer Entstehung gehindert.

Aus der DE 10 2007 054 115 A1 sind ein Verfahren und eine Vorrichtung zur Reduzierung von Geruchsbelästigungen in Abwässern bekannt. Verfahren und Vorrichtung sollen es dabei ermöglichen, die zur Reduzierung des Schwefelwasserstoffgehaltes von Abwässern erforderliche Zugabemenge an Behandlungsmitteln zu optimieren. Dies erfolgt dabei durch die Bestimmung von Schwefelwasserstoff in der Gas- und/oder Flüssigkeitsphase einer Abwasserleitung an mindestens zwei Stellen mittels Schwefelwasserstoff- und/oder Sulfidanalysatoren. Die Messwerte werden dann zur Regelung der erforderlichen Zugabemenge an Abwasserbehandlungsmitteln verwendet.

Die Aufgabe der vorliegenden Erfindung besteht darin, ein verbessertes einfaches Verfahren und eine Vorrichtung zur Verringerung oder Vermeidung der Bildung von H₂S, biogener Schwefelsäure und/oder Mercaptanen in Abwasserkanalsystemen vorzustellen. Durch die Erfindung soll erreicht werden, dass infolge eines sich durch das Verfahren einstellenden biologischen Prozesses die Entstehung von H₂S vermieden werden soll.

Erfindungsgemäß wird diese Aufgabe durch die Merkmale der Ansprüche 1 und 11 gelöst. Vorteilhafte Weiterbildungen der Erfindung sind in den jeweils zugehörigen Ansprüchen enthalten. Demnach umfasst die vorliegende Erfindung eine Vorrichtung zur Verringerung oder Vermeidung der Bildung von H₂S, biogener Schwefelsäure und/oder Mercaptanen in Abwasserkanalsystemen die als Unterflur-Dosiersystem ausgebildet ist, welches eine tragende Konstruktion, einen Dosierbehälter und eine Dosiereinrichtung umfasst, wobei die tragende Konstruktion aus einem Tragring und einen Tragkorb besteht, der Dosierbehälter im Tragkorb gelagert ist und am Behälterboden eine Steckkupplung zur Aufnahme der Dosiereinrichtung angeordnet ist, wobei die Dosiereinrichtung als Tropfendosierer ausgebildet ist.

Vorteilhaft ist vorgesehen, dass der Tragring und der Tragkorb der tragenden Konstruktion lösbar miteinander verbunden sind und der Tragring mit Mitteln zur Lagerung und Befestigung in Abwasserkanalschächten versehen ist. Dabei ist vorgesehen, dass diese Mittel als vier gleichmäßig voneinander beabstandete Winkel ausgebildet sind. Vorteilhaft ist weiter vorgesehen, dass der Tragkorb wenigstens drei Tragstäbe, zwei Auflagestäbe sowie einen Verbindungsstab umfasst. Zwei Tragstäbe sind an einer Seite durch den einen Auflagestab voneinander beabstandet. Der andere Auflagestab ist etwa mittig im Winkel von 90° am ersten Auflagestab angeordnet ist und im Winkel von 90° mit dem dritten Tragstab verbunden. Der Verbindungsstab ist parallel und im Abstand vom ersten Auflagestab zwischen den ersten Tragstäben angeordnet, wobei alle Tragstäbe mit Laschen oder Winkeln zur Einhängung in den Tragring versehen sind.

Nach einem weiteren Merkmal der Erfindung ist vorgesehen, dass der Dosierbehälter zylinderförmig mit einem halbkreisförmigen Querschnitt ausgebildet ist.

Die dem Behälterboden gegenüberliegende Behälterseite weist einen Einfüllstutzen mit Deckel, einen Entlüftungsstutzen sowie zwei Traggriffe auf. Vorteilhaft ist vorgesehen, dass die Dosiereinrichtung einen Kupplungsstecker zur Verbindung mit der im Behälterboden angeordneten Steckkupplung aufweist.

Die als Tropfendosierer ausgebildete Dosiereinrichtung umfasst dabei vorteilhaft ein halbrohrförmiges Gehäuse, eine Gewindetülle, einen Verbindungsschlauch, einen Feststofffilter sowie ein damit verbundenes Tropfventil, welches in einer am halbrohrförmigen Gehäuse angeordneten Kappe mündet.

Die Dosiermenge ist durch Drehen der Gewindetülle einstellbar. Die erfindungsgemäße Vorrichtung ist ohne weiteres in alle üblichen Kanalschachthälse unterhalb des Schachtdeckels ohne konstruktive Änderungen einsetzbar. Dadurch wird jeglicher baulicher Aufwand vermieden, wodurch eine Belästigung der Anwohner sowie Baukosten unterbleiben. Aufgrund der Tatsache, dass keine elektrischen und/oder durch andere Energiequellen betriebenen Pumpen verwendet werden, ist eine Anbindung des Unterflur-Dosiersystems an die Elektroversorgung oder sonstige Steuer und Medienkabel nicht erforderlich. Die einfache Konstruktion der Vorrichtung ermöglicht weiter den Einsatz in Ex-Zonen, da diese nicht unter die Richtlinie 94/9/EG fällt und ist somit für den Einsatz in den explosionsgefährdeten Bereichen in Abwasser Kanalsystemen geeignet.

Die Explosionsschutzverordnung (11. GPSGV oder auch Elfte Verordnung zum Geräte- und Produktsicherheitsgesetz) setzt in Deutschland die Europäische ATEX (Atmosphère Explosible)-Produktrichtlinie 94/9/EG in nationales Recht um. Sie regelt das Inverkehrbringen von neuen Geräten und Schutzsystemen zur bestimmungsgemäßen Verwendung in explosionsgefährdeten Bereichen. Diese Verordnung gründet auf § 3 des Geräte- und Produktsicherheitsgesetzes (GPSG).

Da die erfindungsgemäße Vorrichtung nicht unter die vorgenannte Regelung fällt, ist ein Einsatz in den Abwasserschächten und -kanälen rechtlich erlaubt und daher ohne weitergehende sicherheitstechnische Ausstattungen möglich.

Zum Umfang der Erfindung gehört auch ein Verfahren zur Verringerung oder Vermeidung der Bildung von H₂S, biogener Schwefelsäure und/oder Mercaptanen durch Zudosierung von dosierfähigen Behandlungsmitteln auf Basis von Nitrat in Abwasserkanalsystemen, nach welchem vorgesehen ist, dass die Dosierung der Behandlungsmittel mittel einer Vorrichtung gemäß den o.g. Merkmalen erfolgt, wobei die Vorrichtung als Unterflur-Dosiersystem im Bereich unterhalb von Schachtabdeckungen von Kanalsystemen eingesetzt wird und die Dosierung des Behandlungsmittels mengen- und zeitmäßig bis zur Einstellung eines stabilen biologischen Systems in den kontaminierten Abwasserkanälen erfolgt.

Nach einem bevorzugten Merkmal ist vorgesehen, dass
- die Konzentration und die Ganglinie der H₂S-Ausbreitung im Kanalsystem mittels H₂S-Messgeräten bestimmt wird,
- aus den Messergebnissen die Lage und Anzahl der anzuordnenden Unterflur-Dosiersysteme abgeleitet wird,
- die erforderlichen Dosiermenge des Behandlungsmittels bestimmt und über die Tropfgeschwindigkeit sowie der Anzahl der anzuordnenden Unterflur-Dosiersysteme eingestellt wird,
- der Behandlungserfolg im Kanalsystem über H₂S-Messgeräte kontrolliert und dokumentiert wird.

Vorteilhaft ist dabei vorgesehen, dass die Dosiermenge des Behandlungsmittels pro Zeiteinheit variabel einstellbar ist, wobei als treibende Kraft lediglich die Schwerkraft auf das Behandlungsmittel wirkt.

Durch die zeit- und mengenmäßig Dosierung des Behandlungsmittels wird vorteilhaft die Entstehung einer H₂S-bildenden Biologie verhindert.

Weitere Vorteile und Merkmale der Erfindung ergeben sich aus dem nachfolgend beschriebenen Ausführungsbeispiel. Die gezeigten Figuren dienen der näheren Erläuterung der Erfindung ohne diese jedoch zu begrenzen. Es zeigen
- Fig. 1: eine perspektivische Ansicht des Unterflur-Dosiersystems,
- Fig. 2: eine weitere perspektivische Ansicht des Unterflur-Dosiersystems,

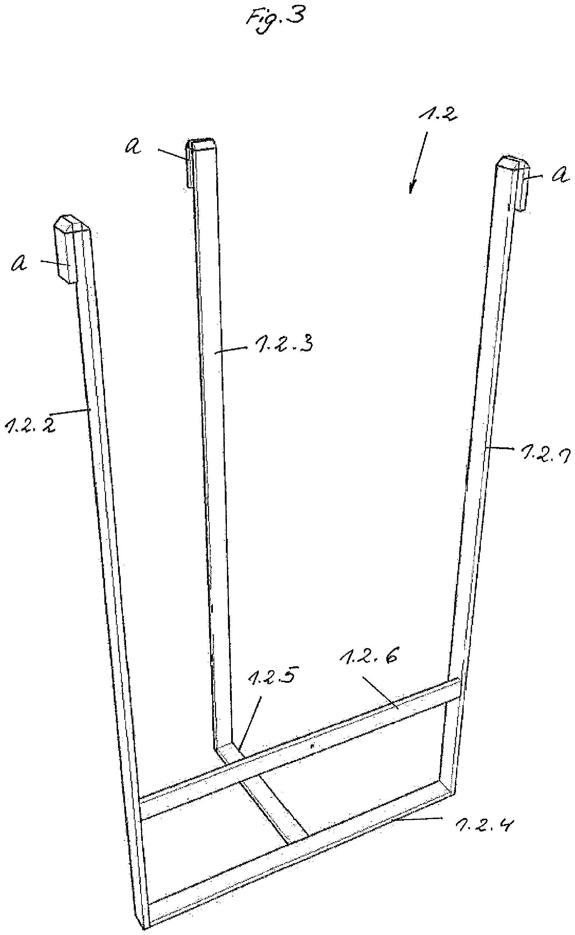

- Fig. 3: eine perspektivische Ansicht des Tragkorbs,

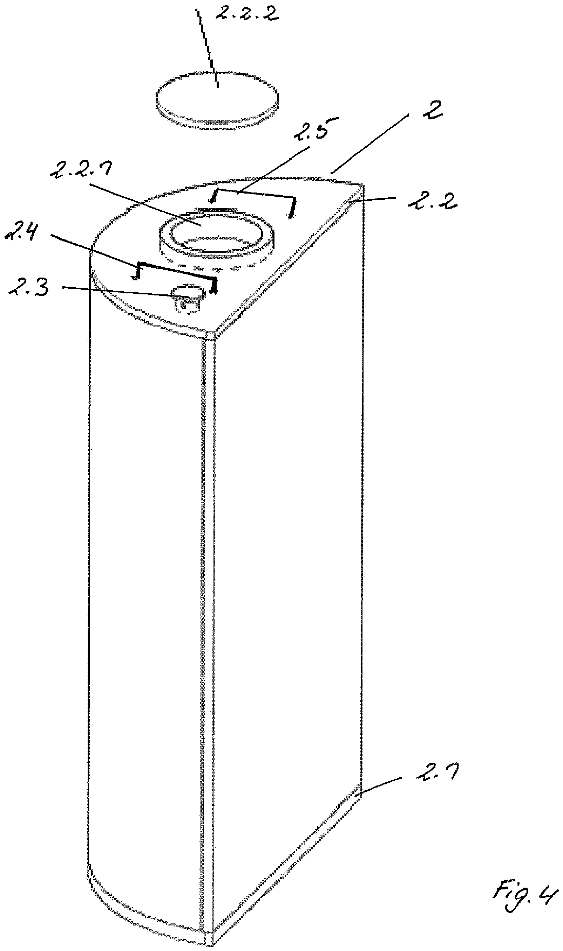

- Fig. 4: eine perspektivische Ansicht des Dosierbehälters,

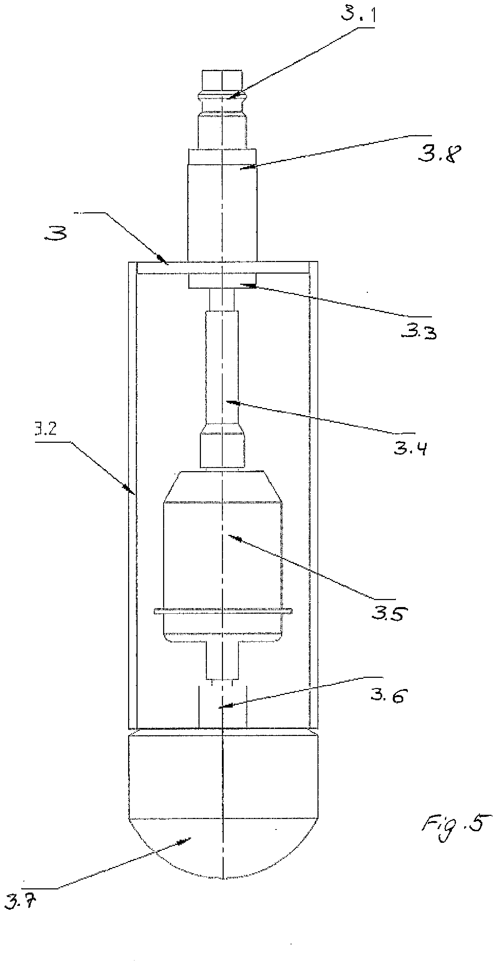

- Fig. 5: eine schematische Ansicht der Dosiereinrichtung.

Die erfindungsgemäße Vorrichtung ist zur Verringerung bzw. Vermeidung der Bildung von H₂S, biogener Schwefelsäure und/oder Mercaptanen in Abwasserkanalsystemen einsetzbar und dazu vorteilhaft als Unterflur-Dosiersystem ausgebildet.

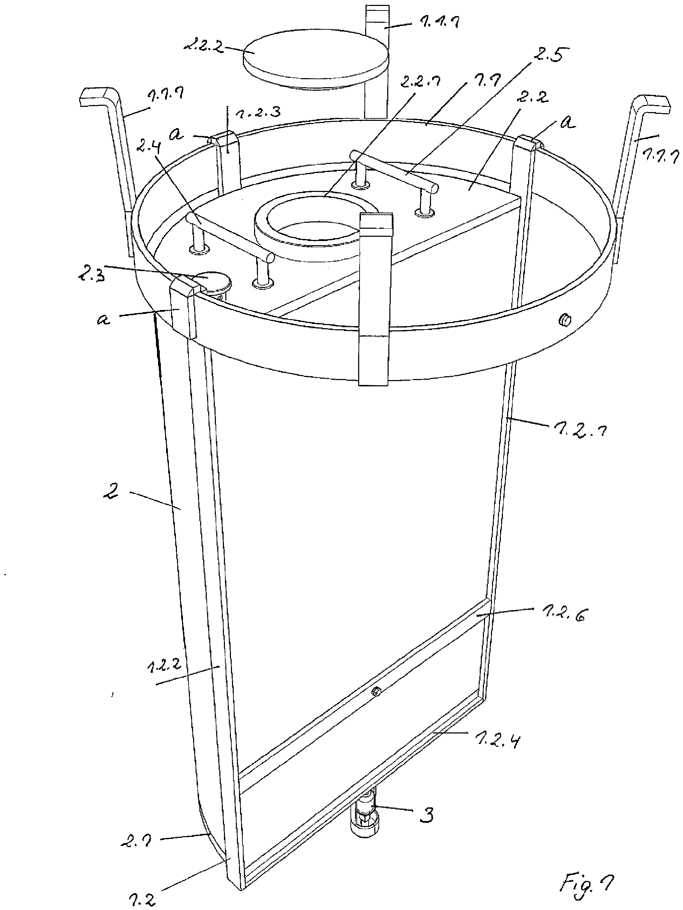

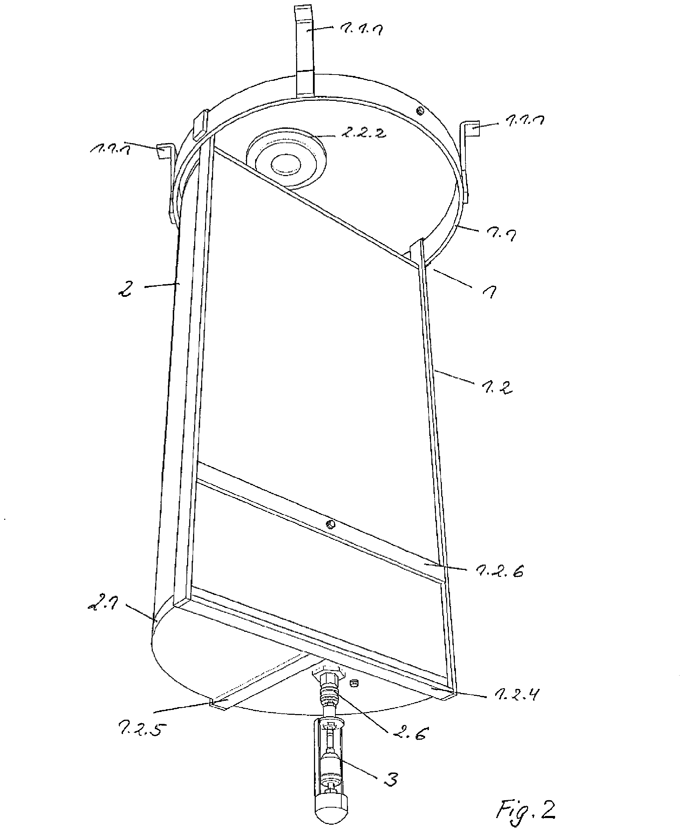

Die in den Fig. 1 und 2 dargestellte Vorrichtung umfasst eine tragende Konstruktion 1, einen Dosierbehälter 2 und eine Dosiereinrichtung 3, wobei die tragende Konstruktion 1 aus einem Tragring 1.1 und einen Tragkorb 1.2 besteht. Der Dosierbehälter 2 ist im Tragkorb 1.2 angeordnet. Am Behälterboden 2.1 ist eine Steckkupplung 2.6 zur Aufnahme der Dosiereinrichtung 3 angeordnet ist. Die Dosiereinrichtung 3 ist als Tropfendosierer ausgebildet. Der Tragring 1.1 und der Tragkorb 1.2 der tragenden Konstruktion 1 sind lösbar miteinander verbunden. Der Tragring 1.1 ist mit Mitteln 1.1.1 zur Lagerung und Befestigung in Abwasserkanalschächten versehen, die hier als vier gleichmäßig voneinander beabstandete Winkel ausgebildet sind. Der Tragkorb 1.2 umfasst vorzugsweise drei Tragstäbe 1.2.1 -1.2.3, zwei Auflagestäbe 1.2.4, 1.2.5 sowie einen Verbindungsstab 1.2.6, wobei die Tragstäbe 1.2.1, 1.2.2 an einer Seite durch den Auflagestab 1.2.4 voneinander beabstandet sind. Der Auflagestab 1.2.5 ist etwa mittig im Winkel von 90° am Auflagestab 1.2.4 angeordnet und im Winkel von 90° mit dem Tragstab 1.2.3 verbunden. Der Verbindungsstab 1.2.6 ist parallel und im Abstand vom Auflagestab 1.2.4 zwischen den Tragstäben 1.2.1, 1.2.2 angeordnet. Die Tragstäbe 1.2.1 - 1.2.3 sind mit Laschen oder Winkeln a zur Einhängung in den Tragring 1.1 versehen. Der Dosierbehälter 2 ist vorzugsweise zylinderförmig mit einem halbkreisförmigen Querschnitt ausgebildet, wobei die dem Behälterboden 2.1 gegenüberliegende Behälterseite 2.2 einen Einfüllstutzen 2.2.1 mit Deckel 2.2.2, einen Entlüftungsstutzen 2.3 sowie Traggriffe 2.4, 2.5 aufweist. Die Befüllung des Systems kann von oben erfolgen, ohne dass das System dafür aus dem Schachthals herausgenommen werden muss.

Dadurch wird eine optimale Lagerung des Dosierbehälters sowie perfekte Anordnung und Handhabung des Systems im Kanalschacht ermöglicht.

Die Dosiereinrichtung 3 weist einen Kupplungsstecker 3.1 zur Verbindung mit der im Behälterboden 2.1 angeordneten Steckkupplung 2.6 auf. Der Kupplungsstecker 3.1 ist über eine Muffe 3.8 mit dem Gehäuse der Dosiereinrichtung 3 verbunden. Die als Tropfendosierer ausgebildete Dosiereinrichtung 3 weist ein halbrohrförmiges Gehäuse 3.2, eine Gewindetülle 3.3, einen Verbindungsschlauch 3.4, einen Feststofffilter 3.5 und ein damit verbundenes Tropfventil 3.6 auf, welches in einer Kappe 3.7 mündet, die am halbrohrförmigen Gehäuse 3.2 angeordnet ist. Die Dosiermenge ist durch Drehen der Gewindetülle 3.3 einstellbar. Die Dosierung des Behandlungsmittels erfolgt demnach ohne den Einsatz von Pumpen, sonder ausschließlich über eine Tropfdüse. Zur Vermeidung bzw. Verringerung von Verblockungen ist vor der Tropfdüse ein Filter angeordnet.

Die Verringerung bzw. Vermeidung der Bildung von H₂S, biogener Schwefelsäure und/oder Mercaptanen erfolgt erfindungsgemäß durch Zudosierung von dosierfähigen Behandlungsmitteln auf Basis von Nitrat in Abwasserkanalsysteme mittel der oben beschriebenen Vorrichtung, wobei die Vorrichtung als Unterflur-Dosiersystem im Bereich unterhalb von Schachtabdeckungen von Kanalsystemen platziert wird und die Dosierung des Behandlungsmittels mengen- und zeitmäßig bis zur Einstellung eines stabilen biologischen Systems in den kontaminierten Abwasserkanälen erfolgt.

Dabei werden die Konzentration und die Ganglinie der H₂S-Ausbreitung im Kanalsystem mittels H₂S-Messgeräten bestimmt. Aus den Messergebnissen wird dann die Lage und Anzahl der im Kanalsystem anzuordnenden Unterflur-Dosiersysteme abgeleitet und die erforderliche Dosiermenge des Behandlungsmittels bestimmt und über die Tropfgeschwindigkeit sowie der Anzahl der anzuordnenden Unterflur-Dosiersysteme eingestellt.

Der Behandlungserfolg im Kanalsystem wird dann über H₂S-Messgeräte kontrolliert und dokumentiert. Die Dosiermenge des Behandlungsmittels ist dabei pro Zeiteinheit variabel einstellbar, wobei als treibende Kraft lediglich die Schwerkraft auf das Behandlungsmittel wirkt. Durch die zeit- und mengenmäßig Dosierung des Behandlungsmittels wird erfolgreich die Entstehung einer H₂S-bildenden Biologie verhindert. Im Gegensatz zu einer "einmaligen punktuellen Dosierung", wie diese bei über Flur angeordneten Dosieranlagen erfolgt, ist es Teil der Erfindung bei Notwendigkeit entlang der Kanaltrasse in verschiedenen Schächten "mehrere Dosierungen mit geringen Dosen" durchzuführen.

Das Behandlungsmittel (ein Nitrat-basiertes Produkt), welches die "gute Biologie" fördert und die H₂S-bildende Biologie somit erst gar nicht entstehen lassen soll, kann somit durch die biologisch aktiven Mikroorganismen besser verarbeitet werden als wenn nur an einem Dosierpunkt eine größere Menge zugeführt werden würde. Sofern aus Nebenarmen ggf. belastetes Wasser in den "bereits in Dosierung befindlichen Kanalstrang" hinzufließt, so ist es mit der vorliegenden Erfindung möglich unmittelbar nach Einmündung des Seitenarmes wieder ein Unterflurdosiersystem zu installieren, um dort dem Kanal die niedrigst notwendige Dosiermenge hinzuzufügen.

## Patentansprüche

1. Vorrichtung zur Verringerung oder Vermeidung der Bildung von H₂S, biogener Schwefelsäure und/oder Mercaptanen in Abwasserkanalsystemen, **dadurch gekennzeichnet, dass** diese als Unterflur-Dosiersystem ausgebildet ist, welches eine tragende Konstruktion (1), einen Dosierbehälter (2) und eine Dosiereinrichtung (3) umfasst, wobei die tragende Konstruktion (1) aus einem Tragring (1.1) und einen Tragkorb (1.2) besteht, der Dosierbehälter (2) im Tragkorb (1.2) gelagert ist und am Behälterboden (2.1) eine Steckkupplung (2.6) zur Aufnahme der Dosiereinrichtung (3) angeordnet ist, wobei die Dosiereinrichtung (3) als Tropfendosierer ausgebildet ist.

2. Vorrichtung nach Anspruch 1, **dadurch gekennzeichnet, dass** der Tragring (1.1) und der Tragkorb (1.2) der tragenden Konstruktion (1) lösbar miteinander verbunden sind und der Tragring (1.1) mit Mitteln (1.1.1) zur Lagerung und Befestigung in Abwasserkanalschächten versehen ist.

3. Vorrichtung nach Anspruch 2, **dadurch gekennzeichnet, dass** die Mittel (1.1.1) als vier gleichmäßig voneinander beabstandete Winkel ausgebildet sind.

4. Vorrichtung nach den Ansprüchen 1 bis 3, **dadurch gekennzeichnet, dass**
- der Tragkorb (1.2) wenigstens drei Tragstäbe (1.2.1 -1.2.3), zwei Auflagestäbe (1.2.4, 1.2.5) sowie einen Verbindungsstab (1.2.6) umfasst,
- die Tragstäbe (1.2.1, 1.2.2) an einer Seite durch den Auflagestab (1.2.4) voneinander beabstandet sind,
- der Auflagestab (1.2.5) etwa mittig im Winkel von 90° am Auflagestab (1.2.4) angeordnet ist und im Winkel von 90° mit dem Tragstab (1.2.3) verbunden ist,
- der Verbindungsstab (1.2.6) parallel und im Abstand vom Auflagestab (1.2.4) zwischen den Tragstäben (1.2.1, 1.2.2) angeordnet ist,
- die Tragstäbe (1.2.1 - 1.2.3) mit Laschen oder Winkeln (a) zur Einhängung in den Tragring (1.1) versehen sind.

5. Vorrichtung nach den Ansprüchen 1 bis 4, **dadurch gekennzeichnet, dass** der Dosierbehälter (2) zylinderförmig mit einem halbkreisförmigen Querschnitt ausgebildet ist.

6. Vorrichtung nach den Ansprüchen 1 bis 5, **dadurch gekennzeichnet, dass** die dem Behälterboden (2.1) gegenüberliegende Behälterseite (2.2) einen Einfüllstutzen (2.2.1) mit Deckel (2.2.2), einen Entlüftungsstutzen (2.3) sowie Traggriffe (2.4, 2.5) aufweist.

7. Vorrichtung nach den Ansprüchen 1 bis 6, **dadurch gekennzeichnet, dass** die Dosiereinrichtung (3) einen Kupplungsstecker (3.1) zur Verbindung mit der im Behälterboden (2.1) angeordneten Steckkupplung (2.6) aufweist.

8. Vorrichtung nach den Ansprüchen 1 bis 7, **dadurch gekennzeichnet, dass** die als Tropfendosierer ausgebildete Dosiereinrichtung (3) ein halbrohrförmiges Gehäuse (3.2), eine Gewindetülle (3.3), einen Verbindungsschlauch (3.4), einen Feststofffilter (3.5) und ein damit verbundenes Tropfventil (3.6) umfasst, welches in einer am halbrohrförmigen Gehäuse (3.2) angeordneten Kappe (3.7) mündet.

9. Vorrichtung nach Anspruch 8, **dadurch gekennzeichnet, dass** die Dosiermenge durch Drehen der Gewindetülle (3.3) einstellbar ist.

10. Vorrichtung nach den Ansprüchen 1 bis 9, **dadurch gekennzeichnet, dass** diese für den Einsatz in den explosionsgefährdeten Bereichen in Abwasser Kanalsystemen geeignet ist.

11. Verfahren zur Verringerung oder Vermeidung der Bildung von H₂S, biogener Schwefelsäure und/oder Mercaptanen durch Zudosierung von dosierfähigen Behandlungsmitteln auf Basis von Nitrat in Abwasserkanalsystemen, **dadurch gekennzeichnet, dass** die Dosierung der Behandlungsmittel mittel einer Vorrichtung gemäß den Merkmalen der Ansprüche 1 bis 10 erfolgt, wobei die Vorrichtung als Unterflur-Dosiersystem im Bereich unterhalb von Schachtabdeckungen von Kanalsystemen eingesetzt wird und die Dosierung des Behandlungsmittels mengen- und zeitmäßig bis zur Einstellung eines stabilen biologischen Systems in den kontaminierten Abwasserkanälen erfolgt.

12. Verfahren nach Anspruch 11, **dadurch gekennzeichnet, dass**
- mittels H₂S-Messgeräten eine Konzentration und eine Ganglinie der H₂S-Ausbreitung im Kanalsystem bestimmt werden,
- aus den Messergebnissen Lage und Anzahl der anzuordnenden Unterflur-Dosiersysteme abgeleitet werden,
- eine erforderlichen Dosiermenge des Behandlungsmittels bestimmt wird und die über eine Tropfgeschwindigkeit sowie eine Anzahl der anzuordnenden Unterflur-Dosiersysteme eingestellt wird,
- ein Behandlungserfolg im Kanalsystem über H₂S-Messgeräte kontrolliert und dokumentiert wird.

13. Verfahren nach den Ansprüchen 11 und 12, **dadurch gekennzeichnet, dass** die Dosiermenge des Behandlungsmittels pro Zeiteinheit variabel einstellbar ist, wobei als treibende Kraft lediglich die Schwerkraft auf das Behandlungsmittel wirkt.

14. Verfahren nach den Ansprüchen 10 bis 13, **dadurch gekennzeichnet, dass** durch die zeit- und mengenmäßig Dosierung des Behandlungsmittels die Entstehung einer H₂S-bildenden Biologie verhindert wird.
